# EUROPÄISCHE PATENTANMELDUNG

(11) **EP 1 909 500 A2**
(43) Veröffentlichungstag der Anmeldung: **09.04.2008**
(21) Anmeldenummer: 07019503.7
(22) Anmeldetag: 05.10.2007
(51) Int. Cl.: H04N 7/24

(54) **System und Verfahren zur Distribution von Megainhalten, beispielsweise einer Spielfilmvideodatei**

(30) Priorität: 06.10.2006 DE 102006047308
(71) Anmelder: Deutsche Telekom AG, 53113 Bonn (DE)
(72) Erfinder: Hasemann, Jõrg-Michael, Dr., 27321 Emtinghausen (DE)

(57) **Zusammenfassung**

System zur Distribution von Megainhalten (1), die von einem Nutzer (2) drahtlos per mobilem Endgerät (3) beziehbar sind, das mit einem Telekommunikationsnetz (6) in Verbindung steht, in dem mindestens eine von einem Inhalteserver (4) kontrollierte Datenbank (5) zur Speicherung verschiedener Megainhalte (1) vorgesehen ist, wobei das Telekommunikationsnetz (6) mehrere dezentrale Distributionsserver (7) mit HSRN-Schnittstelle (8) umfasst, worüber zuvor vom Nutzer (2) bestellte Megainhalte (1) auf dessen Endgerät (3) vor Ort drahtlos in Hochgeschwindigkeit übertragbar sind.

## Beschreibung

Die vorliegende Erfindung betrifft ein System sowie ein Verfahren zur Distribution von Megainhalten, beispielsweise einer Spielfilmvideodatei, die von einem Nutzer drahtlos per mobilem Endgerät beziehbar sind, welches mit einem Telekommunikationsnetz in Verbindung steht, in dem mindestens eine von einem Inhalt des Server kontrollierte Datenbank zur Speicherung verschiedener Megainhalte vorgesehen ist.

Unter dem Begriff Megainhalt wird im Rahmen der vorliegenden Erfindung eine oder mehrere Dateien verstanden, die eine solch große Datenmenge umfasst, wie zur Hinterlegung eines Spielfilmvideos, eines Computerspiels, von Kartenmaterial oder Musik- und Sprachunterhaltungsmaterial und dergleichen erforderlich ist. Derartige Megainhalte wurden in der Vergangenheit meist in anderer Form, beispielsweise als Druckereierzeugnis, als Videofilme auf VHS/DVD o.ä. vertrieben. Die Erfindung widmet sich der Distribution solcher in elektronischer Form vorliegender Megainhalte an Nutzer.

Aus dem allgemeinen Stand der Technik ist bekannt, Megainhalte der hier interessierenden Art beispielsweise auf einem Speichermedium, wie eine CD oder DVD, abzuspeichern und über den Handel, beispielsweise Elektronikmark oder Videothek, dem Nutzer zur Verfügung zu stellen. Nachteilig hierbei ist die durch das Handling der erforderlichen Datenträger verursachte mangelnde Distributionsflexibilität sowie der Herstellungsaufwand für die mit den Megainhalten versehenen Datenträger.

In jüngster Zeit wird zur Distribution von Megainhalten die zur Verfügung stehende breitbandige Internettechnologie (z. B. DSL) genutzt. Für mobile Kommunikation und Datenübertragung im breitbandigen Bereich eignet sich UMTS-Technologie, um hochvolumige Inhalte auf mobile Endgeräte zu überspielen. Die Übertragung eines hier interessierenden Megainhalts (Spielfilmvideo, Computerspiele und dergleichen) ist nach den bestehenden Netzwerktechnologien jedoch immer noch recht zeitaufwendig und in mobilen Nutzungssituationen zudem recht kostenaufwendig für den Nutzer.

Es ist daher die Aufgabe der vorliegenden Erfindung, ein System und ein Verfahren zur Distribution von Megainhalten zu schaffen, das für den Nutzer ein Höchstmaß an Flexibilität, insbesondere hinsichtlich des zum Bezug eines gewünschten Megainhalts erforderlichen Zeitaufwands, gestattet.

Die Aufgabe wird ausgehend von einem System gemäß Anspruch 1 in Verbindung mit dessen kennzeichnenden Merkmalen gelöst. Verfahrenstechnisch wird die Aufgabe durch Anspruch 7 gelöst. Die jeweils rückbezogenen Ansprüche geben vorteilhafte Weiterbildungsformen der Erfindung an.

Die Erfindung schließt die systemtechnische Lehre ein, dass in einem vorzugsweise breitbandigen Telekommunikationsnetz mehrere dezentrale Distributionsserver mit HSRN-Schnittstelle vorgesehen sind, worüber zuvor durch den Nutzer bestellte Megainhalte auf dessen Endgerät vor Ort drahtlos in Hochgeschwindigkeit übertragbar sind.

Der Vorteil der erfindungsgemäßen Lösung basiert auf einer Umsetzung des Gedankens einer drahtlos in Hochgeschwindigkeit funktionierenden Datentankstelle. Durch die Drahtlostechnologie, welche beispielsweise über einen Funkkanal oder einen optischen Kanal realisiert werden kann, ist eine mechanische Verbindung und damit eventuell einhergehende Adapterprobleme oder Kontaktverschleißprobleme entbehrlich. Dies schafft entsprechende Flexibilität für den Nutzer. Dessen mobiles Endgerät ist lediglich mit zumindest einer Empfangseinheit auszustatten, welche mit der HSRN-Schnittstelle des Distributionsservers kommunizieren kann. Zum Übertragen eines Megainhalts hat der Nutzer sein mobiles Endgerät lediglich in einen geringen Abstand von wenigen Metern zum Distributionsserver, also vor Ort zu bringen. HSRN (High Speed Short Range Data Communication) kann in Form verschiedener Übertragungsprotokolle, beispielsweise 802.11n realisiert sein. Hiermit sind Übertragungsraten im Bereich der Hochgeschwindigkeit von bis zu 600 Mbs möglich, womit eine volle DVD von 4,5 GB innerhalb von 1,5 bis 2 Minuten übertragen werden kann. Das erfindungsgemäße System und Verfahren ist in der Lage, herkömmliche beschriebene Datenträger, wie CDs oder DVDs zu ersetzen. Dementsprechend entfallen die diesbezüglichen Herstellkosten sowie der mit dem Handling der gegenständlichen Speichermedien verbundene Logistikaufwand. Verteilung und Kaufvorgang von Megainhalten lassen sich vollständig elektronisch abwickeln.

Gemäß einer weiteren, die Erfindung verbessernden Maßnahme ist vorgesehen, dass zur Autorisierung, d.h. zur Identifikation und Nutzungsrechtsprüfung des Nutzers die DRM-Technologie zum Einsatz kommt. Der Inhalteserver oder der Distributionsserver des Systems kann dabei den Megainhalt mittels DRM-Verpackers verschlüsseln. DRM (Digital Rights Management) ist allgemein bekannt und verwirklicht die Idee einer Zugriffskontrolle auf digitale Inhalte mit Hilfe von kryptographischen Verfahren. Realisiert wird dies, in dem ein beliebiger digitaler Inhalt durch Verschlüsselung eindeutig an eine Lizenz gebunden wird. Ohne die zum digitalen Inhalt gehörige gültige Lizenz kann der Benutzer zwar den digitalen Inhalt erwerben, nicht jedoch hierauf zugreifen. Der Inhalt des Server verwaltet die zu schützenden digitalen Megainhalte und verschlüsselt mit Hilfe des DRM-Verpackers, wodurch die Megainhalte vorerst unlesbar werden. Es kann im Rahmen des Systems zusätzlich ein Lizenzserver zum Einsatz kommen, der die erforderlichen Lizenzen zusammen mit den zugehörigen Schlüsseln für die Authentifizierung und Inhalteentschlüsselung verwaltet, welche aus den entsprechenden Kennungen des Nutzers und den Beschreibungen der Rechte berechtigt werden. Möchte ein Nutzer auf einen per DRM geschützten Megainhalt zugreifen, fordert eine DRM-Steuerung die zur Wiedergabe notwendige Lizenz vom Lizenzserver an. Werden Authenzität und Integrität des Wiedergabeprogramms verifiziert, werden die Megainhalte mit dem in der Lizenz enthaltenen Schlüssel entschlüsselt, auf diese Weise wieder lesbar gemacht und an das Wiedergabeprogramm auf dem mobilen Endgerät weitergegeben.

Gemäß einer weiteren, die Erfindung verbessernden Maßnahme ist vorgesehen, dass ein Backendserver zum Authentifizieren des Endgeräts und/oder des Nutzers sowie zur Abrechnung der vom Nutzer bezogenen Megainhalte im Telekommunikationsnetz vorgesehen ist. Der Backendserver kann also die Berechtigungen zum Bezug von Megainhalten prüfen und die Abrechnung des Bezugs erfassen.

Vorzugsweise ist der die Datenbank mit den Megainhalten verwaltende Inhalteserver mit einem Ordnersystem versehen, mit welchem die Bestellungen von Nutzern empfangen werden und deren Übertragung auf den von jedem Nutzer gewünschten Distributionsserver durchgeführt wird.

Gemäß einer anderen die Erfindung verbessernden Maßnahme wird vorgeschlagen, die Bestellung eines gewünschten Megainhalts und/oder die Authentifizierung des Nutzers über einen von der HSRN-Schnittstelle verschiedenen Kommunikationskanal durchzuführen. Als ein solcher Kommunikationskanal eignet sich beispielsweise eine Festnetz- oder Mobilfunkverbindung, mit welcher die zur Bestellung dienende Kommunikation mit dem Betreiber des Systems durchgeführt werden kann. In diesem Zusammenhang ist es auch denkbar, dass die Bestellung in Form eines Abonnements erfolgt, so dass ein Bezug von Megainhalten in bestimmten Zeitabständen automatisch möglich ist, ohne dass der Nutzer diesen Bezug jedes Mal anstoßen muss. Die Bestellung von Megainhalten - beispielsweise Kartenmaterial - kann auch durch Ereignisse automatisch ausgelöst werden, beispielsweise nachdem eine neuere Version zur Verfügung steht. Natürlich ist es auch denkbar, zur Abgabe der Bestellung die HSRN-Schnittstelle zu nutzen. In diesem Falle kann derselbe Distributionsserver für die Übertragung der Megainhalte automatisch bestimmt werden.

Vorzugsweise wird der vom Nutzer bestellte Megainhalt nach der Bestellung vom Inhalteserver ausgehend von der zentralen Datenbank über das vorzugsweise breitbandige Telekommunikationsnetz auf den gewünschten Distributionsserver übertragen. Alternativ hierzu ist es jedoch auch möglich, dass der vom Nutzer bestellte Megainhalt nach der Bestellung von einer im Distributionsserver selbst integrierten Datenbank bereitgestellt wird. Diese Alternative eignet sich insbesondere für oft nachgefragte Megainhalte. Die dezentrale Speicherung vermindert in dieser Situation den Datenverkehr im System und stellt eine schnelle Verfügbarkeit sicher. Normalerweise werden bestellte Megainhalte an einem vom Nutzer ausgewählten Distributionsserver - dessen Standort beispielsweise im Bereich einer Autotankstelle sein kann - bereitgestellt. Es ist jedoch auch denkbar, Megainhalte an allen oder einer sinnvollen Teilmenge von Distributionsservern bereitzustellen, um dem Nutzer eine freie Auswahl des Bezugsortes zu ermöglichen.

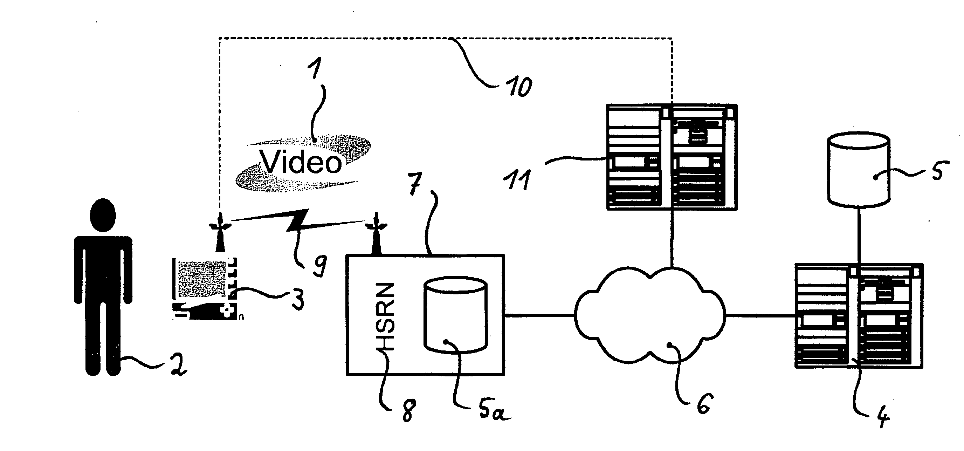

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Darstellung eines Systems zur Distribution von Megainhalten.

Gemäß Figur besteht das System zur Distribution von Megainhalten 1, die von einem Nutzer 2 drahtlos per mobilem Endgerät 3 beziehbar sind, im Wesentlichen aus einem Inhalt des Server 4, an dem eine zentrale Datenbank 5 zur Speicherung verschiedener Megainhalte 1 angeschlossen ist. Über ein Telekommunikationsnetz 6 sind mehrere dezentrale Distributionsserver 7 - hier nur einer exemplarisch gezeigt - mit jeweiliger HSRN-Schnittstelle 8 angeschlossen. Über die HSRN-Schnittstelle 8 des Distributionsservers 7 bezieht der Nutzer 2 vorbestellte Megainhalte 1, welche auf dessen Endgerät 3 vor Ort drahtlos in Hochgeschwindigkeit mit einer Übertragungsrate von 300 bis 600 Mbs übertragen werden. Die drahtlose Übertragung des Megainhalts 1 - hier ein Videospielfilm - per HSRN-Schnittstelle 8 erfolgt in diesem Ausführungsbeispiel über einen Funkkanal 9. Neben dem der HSRN-Schnittstelle 8 zugeordneten Funkkanal 9 existiert ein separater Kommunikationskanal 10. Über den hier als Mobilfunkverbindung ausgebildeten Kommunikationskanal 10 erfolgt die Bestellung eines gewünschten Megainhalts 1 sowie die Authentifizierung des Nutzers 2.

Das Authentifizieren wird per DRM durchgeführt, wozu in diesem Ausführungsbeispiel der Distributionsserver 7 den Megainhalt 1 mittels DRM-Verpacker verschlüsselt. Ein ebenfalls am Telekommunikationsnetz 6 abgeschlossener Backendserver 11 dient dem Authentifizieren des Endgeräts 3 bzw. des Nutzers 1 sowie dem Abrechnen bezogener Megainhalte 1. Die Inrechnungsstellung erfolgt über an sich bekannte Verfahren zum elektronischen Zahlungsverkehr. Ein vom Nutzer 2 bestellter Megainhalt 1 wird nach der Bestellung vom Inhalt des Server 4 ausgehend von der zentralen Datenbank 5 über das Telekommunikationsnetz 6 auf den gewünschten Distributionsserver 7 übertragen. Alternativ oder zusätzlich hierzu wird zum selben Zweck eine dezentral im Distributionsserver 7 angeordnete weitere Datenbank 5a verwendet.

Zur Nutzung des vorstehend beschriebenen Systems ist der Nutzer 2 mit dem von ihm verwendeten Endgerät 3 beim Betreiber des Systems registriert, so dass eine Möglichkeit zur Identifikation des Nutzers 2 durch Username/Passwort oder Endgeräte-ID erfolgen kann. Der Nutzer 2 nutzt seine Identifikation, um die Bestellung eines von ihm gewünschten Megainhalts 1, beispielsweise eines bestimmten Spielfilmvideos, über den als Mobilfunkkanal ausgebildeten Kommunikationskanal 10 auszulösen. Hierüber wird weiterhin der vom Nutzer 2 gewünschte Distributionsserver 7 spezifiziert. Der Nutzer 2 wird einen solchen Distributionsserver 7 wählen, welcher von ihm örtlich gut erreichbar sein wird. Der systemseitig am Kommunikationskanal 10 angeschlossene Backendserver 11 identifiziert den Nutzer 2 und prüft dessen Berechtigung zum Bezug des gewünschten Megainhalts 1. Die Bestellung wird anschließend an das Ordnersystem des Inhalteservers 4 übertragen. Der bestellte Megainhalt 1 kann dann über das breitbandige Telekommunikationsnetz 6 an den spezifizierten Distributionsserver 7 für den Nutzer 2 und sein spezifiziertes und berechtigtes Endgerät 3 bereitgestellt werden. Der spezifizierte Distributionsserver 7 signalisiert den bereitstehenden Megainhalt 1 per DRM an das Endgerät 3, so dass der Nutzer nur entsprechend der bestellten Lizenzbedingungen den Megainhalt 1 nutzen kann. Der Nutzer 1 kann nun über das Endgerät 3 vor Ort Kontakt mit dem spezifizierten Distributionsserver 7 aufnehmen, um den bestellten, dort bereitstehenden Megainhalt 1 über die HSRN-Schnittstelle hochzuladen. Anschließend quittiert der Distributionsserver 7 die erfolgreiche Übertragung an das Ordnersystem des Inhaltsservers 4, um anschließend die Rechnungsstellung auszulösen.

Die Erfindung beschränkt sich nicht auf das vorstehend beschriebene bevorzugte Ausführungsbeispiel. Es sind vielmehr auch Abwandlungen hiervon denkbar, welche vom Rahmen der nachfolgenden Ansprüche umfasst sind. So kann zur Bestellung eines Megainhalts 1 auch direkt die HSRN-Schnittstelle 8 des Distributionsservers 7 genutzt werden, was allerdings voraussetzt, dass sich der Nutzer 2 mit seinem Endgerät 3 bereits vor Ort befindet. Ferner kann eine Teilmenge oft genutzter Megainhalte 1 bereits vor Ort im jeweiligen Distributionsserver 7 in einer eigenen Datenbank 5a hinterlegt sein, was den Datenverkehr innerhalb des Telekommunikationsnetzes 6 senkt.

### Bezugszeichenliste

- **1**: Megainhalt
- **2**: Nutzer
- **3**: Endgerät
- **4**: Inhalt des Server
- **5**: Datenbank
- **6**: Telekommunikationsnetz
- **7**: Distributionsserver
- **8**: HSRN-Schnittstelle
- **9**: Funkkanal
- **10**: Kommunikationskanal
- **11**: Back-End-Server

## Patentansprüche

1. System zur Distribution von Megainhalten (1), die von einem Nutzer (2) drahtlos per mobilem Endgerät (3) beziehbar sind, das mit einem Telekommunikationsnetz (6) in Verbindung steht, in dem mindestens eine von einem Inhalteserver (4) kontrollierte Datenbank (5) zur Speicherung verschiedener Megainhalte (1) vorgesehen ist,
**dadurch gekennzeichnet, dass** das Telekommunikationsnetz (6) mehrere dezentrale Distributionsserver (7) mit HSRN-Schnittstelle (8) umfasst, worüber zuvor vom Nutzer (2) bestellte Megainhalte (1) auf dessen Endgerät (3) vor Ort drahtlos in Hochgeschwindigkeit übertragbar sind.

2. System nach Anspruch 1,
**dadurch gekennzeichnet, dass** die drahtlose Übertragung der Megainhalte (1) von der HSRN-Schnittstelle (8) zum Endgerät (3) über einen Funkkanal (9) oder einen optischen Kanal erfolgt.

3. System nach Anspruch 1,
**dadurch gekennzeichnet, dass** zum Authentifizieren per DRM der Inhalteserver (4) oder der Distributionsserver (7) den Megainhalt (1) mittels DRM-Verpacker verschlüsselt.

4. System nach Anspruch 1,
**dadurch gekennzeichnet, dass** ein Backendserver (11) zum Authentifizieren des Endgeräts (3) und/oder Nutzers (2) sowie zur Abrechnung bezogener Megainhalte (1) im Telekommunikationsnetz (6) vorgesehen ist.

5. System nach Anspruch 1,
**dadurch gekennzeichnet, dass** der Inhalteserver (4) ein Ordnersystem zum Empfang von Bestellungen des Nutzers (2) an Megainhalten (1) und deren Übertragung auf den vom Nutzer (2) gewünschten Distributionsserver (7) umfasst.

6. System nach Anspruch 1,
**dadurch gekennzeichnet, dass** der Megainhalt (1) eine Datenmenge von größer als 100 Megabyte darstellt, die in Form einer Video- und/oder Audiodatei ausgebildet ist, ausgewählt aus einer Gruppe, umfassend: Spielfilmvideodatei, Computerspieldatei, Navigations-Kartenmaterial, Audioguide-Informationsmaterial, Musik-und/oder Sprachunterhaltungsmaterial.

7. Verfahren zur Distribution von Megainhalten (1), die von einem Nutzer (2) drahtlos per mobilem Endgerät (3) bezogen werden, und die über ein Telekommunikationsnetz (6) mit mindestens einer von einem Inhalteserver (4) kontrollierten Datenbank (5) zur Speicherung der Megainhalte (1) übertragen werden,
**dadurch gekennzeichnet, dass** die Übertragung eines bestellten Megainhalts (1) an das mobile Endgerät (3) über einen ausgewählten dezentralen Distributionsserver (7) mit HSRN-Schnittstelle (8) durchgeführt wird, worüber vor Ort drahtlos in Hochgeschwindigkeit übertragen wird.

8. Verfahren nach Anspruch 7,
**dadurch gekennzeichnet, dass** das Endgerät (3) vor der Übertragung des bestellten Megainhalts (1) authentifiziert wird, um dessen Nutzungsrecht zu prüfen.

9. Verfahren nach Anspruch 7 oder 8,
**dadurch gekennzeichnet, dass** die Bestellung eines gewünschten Megainhalts (1) und/oder die Autentifizierung des Nutzers (2) über einen von der HSRN-Schnittstelle (8) verschiedenen Kommunikationskanal (10) durchgeführt wird.

10. Verfahren nach Anspruch 9,
**dadurch gekennzeichnet, dass** als Kommunikationskanal (10) eine Festnetz- oder Mobilfunkverbindung genutzt wird.

11. Verfahren nach Anspruch 8,
**dadurch gekennzeichnet, dass** die Autentifizierung per DRM durchgeführt wird.

12. Verfahren nach Anspruch 7,
**dadurch gekennzeichnet, dass** der vom Nutzer (2) bestellte Megainhalt (1) nach der Bestellung vom Inhalteserver (4) ausgehend von der zentralen Datenbank (5) über das Telekommunikationsnetz (6) auf den gewünschten Distributionsserver (7) übertragen wird.

13. Verfahren nach Anspruch 7,
**dadurch gekennzeichnet, dass** der vom Nutzer (2) bestellte Megainhalt (1) nach der Bestellung von einer im Distributionsserver (7) integrierten Datenbank (5a) bereitgestellt wird.

14. Verfahren nach Anspruch 7,
**dadurch gekennzeichnet, dass** die Übertragung eines bestellten Megerinhalts (1) durch die HSRN-Schnittstelle (8) mit einer Datenübertragungsrate von 300 bis 600 Mbs durchgeführt wird.
